# EUROPEAN PATENT SPECIFICATION

(11) **EP 4 102 124 B1**
(45) Date of publication and mention of the grant of the patent: **11.12.2024**
(21) Application number: 21178379.0
(22) Date of filing: 08.06.2021
(51) Int. Cl.: F16L 41/08, F16L 47/28

(54) **PLASTIC TUBE-LIKE ELEMENT AND METHOD FOR ATTACHING IT TO AN OPENING IN A THIN WALL**
KUNSTSTOFFROHRÄHNLICHEN ELEMENT UND VERFAHREN ZUM VERBINDEN MIT EINEM DÜNNWANDIGEN
PROCÉDÉ DE CONNEXION D'UN TUBE EN PLASTIQUE À PAROI MINCE, ÉLÉMENT TUBULAIRE EN PLASTIQUE ET ENSEMBLE ASSOCIÉ

(43) Date of publication of application: 14.12.2022
(73) Proprietor: Donaldson Company, Inc., Bloomington, MN 55431 (US)
(72) Inventor: TRABKA, Mateusz, Minneapolis, MN 55440-1299 (US); VERSTRAETE, Mathijs, Minneapolis, MN 55440-1299 (US)
(74) Representative: IPLodge bv

(56) References cited:
- EP-A2- 0 339 156
- DE-A1- 102018 123 972
- KR-B1- 101 489 711

## Description

### Technical field

The present disclosure relates to a method for connecting a plastic tube to an opening in a thin wall, and associated plastic tubes and associated assemblies, especially to methods and plastic tubes which allow mounting of the plastic tube to a thin wall without the need for access to both sides of the thin wall, i.e., which allow mounting of the plastic tube on the opening in the thin wall from one side of the thin wall only.

In preferred embodiments, the present disclosure related to the mounting of an outlet or inlet tube of a housing, for instance a housing of a filtration assembly.

### Background art

The state of the art comprises different techniques for attaching a plastic tube to an opening in a wall. This can be performed for instance by using connector pieces, by glueing, welding, or making use of snap fit connections.

Another technique known in industry to connect two generic pieces of a system is the technique of heat staking, whereby a plastic connection part is exposed to heat and is locally deformed in order to connect two pieces of a system. Typically, the connection part is comprised in the first piece, and comprises a protrusion that passes through an opening in the second piece, after which the extreme portion of the protrusion is exposed to heat and pressure such that it deforms and connects the first and second pieces together, in a rivet-type of connection. The heat and pressure must be applied on the side of the second piece which is opposite to the side of the second piece adjacent to the first piece. This technique cannot be used for attaching a plastic tube to an opening in a wall in a straight forward manner. Also, when the wall is a part of a sidewall of a cavity, it is difficult or impossible to reach the extreme portion of the protrusion inside the cavity, even more for relatively small cavities or cavities having complex shape.

EP0339156 A2 discloses a pipe fitting which is inserted into a hollow pipe by forming a hole in that pipe and inserting the fitting into that hole. The fitting is first pushed into the hole until a seal, positioned below a ring on the fitting, is in contact with the outer surface of the pipe. Initially the end of the fitting inserted into the pipe has projections which are bent inwardly, but once the fitting has been inserted into the pipe, the projections are expanded outwardly by a mandrel. The fitting is then drawn upwardly, until a seal around the projections is in contact with the inner surface of the pipe.

DE102018123972A1 discloses a cooling plate for battery cooling and a method for producing a cooling plate. The cooling plate has a plate body with a connecting piece. A cooling fluid is fed to or removed from the cooling plate via the connecting piece. The connecting piece has a mounting flange and a plug-in section. The mounting flange rests flat on one side on the plate body of the cooling plate. The plug-in section is positioned in an assembly opening of the panel body and is plastically deformed. Due to the plastic deformation of the plug-in section, the connecting piece and the plate body of the cooling plate are joined together.

The exist a need in the industry for improved and alternative methods for attaching a plastic tube to an opening in a wall, which can be performed from one side of the wall only.

### Summary of the disclosure

It is an objective of the present disclosure to provide a plastic tube-like element according to claim 1, and to provide associated method for attaching such a plastic tube-like element to an opening in a wall, according to claim 9.

In a first aspect of the present disclosure, a plastic tube-like element is disclosed for being connected to an opening in a wall.

The tube-like element comprises:
- a tube portion extending from a first end to a second end;
- a collar portion surrounding the tube portion and generally radially extending from the tube portion in a first plane, the collar portion being positioned near but not abutting to the second end;
- a circumferential hinge portion connected to the second end of the tube portion and connected to
- a circumferential lip portion, extending from the circumferential hinge portion at a first angle α larger than 30° with respect to the first plane;
- wherein the circumferential hinge portion comprises an inner support surface projecting into a space defined by an axial projection of an inner surface of the tube portion.

The hinge portion is adapted to deform such that the circumferential lip portion is moving from an initial position in which it extends at the first angle α with respect to the first plane to a final position in which it extends parallel to the first plane, when the hinge portion is being heated to a predetermined temperature or temperature range in which the hinge portion becomes deformable; and when the inner support surface receives a predetermined uniform pressure exerted along an axial direction of the tube-like element.

It is an advantage of the tube-like element of the present disclosure that it can be attached to an opening in a wall, without exerting strong forces on the wall which may deform the wall. In preferred embodiments, the wall is thin and could be deformed when exposed to e.g. a snap fit connection of a tube into an opening in the wall.

It is a further advantage that no glue is needed, and that no debris or dust is created during the attachment process.

It is a further advantage that the tube-like element allows attachment to an opening in a wall from one side of the wall only; i.e. without the need to access the other side of the wall. This is especially advantageous when the other side of the wall cannot easily be accessed. This is for instance the case where the wall defines a closed or difficult to access cavity or hollow body as for instance a filter housing. A filter housing can have for instance comprise a small diameter, can have one (remote) access side only, or can comprise obstructing items as for instance a safety element support structure.

It is a further advantage of the present disclosure that the tube-like element does not extend substantially through the wall.

A further advantage is that the required tooling for the production of the tube-like element is limited. Also, the associated process is relatively simple and cheap in respect to certain state of the art methods.

In preferred embodiments, the tube-like element defines an inlet or outlet of a housing, e.g. a filter housing. A filter housing typically defines an internal cavity and comprises an inlet and an outlet opening, one or both of them for instance being embodied as an inlet and/or outlet tube. Within the housing typically a filter element can be arranged, comprising a filter media and typically also one or more seals, such that all or most of the fluid (e.g. air) flow coming in through the inlet and leaving through the outlet has to pass through the filter media.

In preferred embodiments, the wall is a housing wall of such a filter housing. It is a further advantage of the present disclosure that the tube-like element, in case it is forming for instance an inlet or outlet tube of a filter housing, does not extend substantially into the housing, such that it does not hinder the fluid (e.g. air) flow in the housing or the insertion or removal of a replaceable filter element.

In preferred embodiments, the wall comprises or consists of a metal as for instance aluminum, steel or iron. A thin metal wall preferably has a thickness of less than 3 mm, or less than 2 mm or less than 1.5 mm.

It is an advantage of aspects of the present disclosure that a plastic tube can be attached to a metal wall, e.g. a metal filter housing wall.

In alternative embodiments, the wall comprises or consists of plastic. In preferred embodiments the plastic of the wall becomes deformable at a higher temperature as the plastic of the tube-like element. Preferably, the melting point of the wall is higher than the melting point of the tube-like element.

Preferably, the tube portion of the tube-like element be cylindrical. It can comprise a cross-section in a plane perpendicular to a longitudinal axis of the tube portion which is circular. Preferably, the cross-section of the tube portion in a plane perpendicular to a longitudinal axis thereof is symmetric. Alternatively, the cross-section of the tube portion in a plane perpendicular to a longitudinal axis thereof can have other shapes as for instance elliptical, obround or droplet shape, or even square or rectangular shape. Most preferably, the cross-section of the tube portion in a plane perpendicular to a longitudinal axis thereof is circular, obround or elliptical.

Preferably, the circumferential hinge portion and/or the circumferential lip portion can comprise a cross-section in a plane perpendicular to a longitudinal axis of the tube-like element which is circular. Preferably, the cross-section of the circumferential hinge portion and/or the circumferential lip portion in a plane perpendicular to a longitudinal axis of the tube-like element is symmetric. Alternatively, the cross-section of the circumferential hinge portion and/or the circumferential lip portion in a plane perpendicular to a longitudinal axis of the tube-like element can have other shapes as for instance elliptical or obround.

According to preferred embodiments, the circumferential lip portion extends from the circumferential hinge portion at a first angle α with the first plane which is larger than 35°, or larger than 40°, or larger than 45°. Preferably, the angle α is within the range of 30° to 60°.

According to preferred embodiments, the circumferential lip portion extends from the circumferential hinge portion at a first angle α with the first plane which is smaller than 75° or smaller than 60°.

For the purpose of the present disclosure, the plastic material of the tube-like element according to the present disclosure, more specifically of the hinge portion thereof, is considered deformable when it reaches a temperature such that it can be inelastically deformed without breaking. It will be recognised by the skilled person that this is a property of technical plastics which are typically used in hollow bodies to be used at common ambient and room temperatures, as for instance air filter housings. Preferably, the temperature should also not be too high, to avoid a total liquefaction of the hinge portion, in which case embodiments of the present disclosure would lose some of their advantages. In case of total liquefaction of the hinge portion, the hinge portion may for instance tend to stretch out axially instead of making a hinge motion, or may even cause the circumferential lip portion to separate from the rest / drop off.

According to preferred embodiments, the inner support surface is
(a) radially extending from a first radial position corresponding to the axial projection of the inner surface of the tube portion to a second radial position internal to the axial projection of the inner surface of the tube portion; while
(b) axially extending from a first axial position near the end of the tube portion to a second axial position away from the tube portion.

According to preferred embodiments, the inner support surface is a circumferential support surface.

According to preferred embodiments, the inner support surface has a contour which is ring shaped in axial projection and is tapered such that it forms a second angle β with the inner surface of the tube portion of more than 30°, or more than 35°, or more than 40°, or more than 45°. Preferably, the angle β is within the range of 30° to 60°.

Preferably, the inner support surface is flat. Preferably, it is ring-shaped.

According to preferred embodiments, the first angle α and the second angle β are about the same. Preferably, the angles α and β differ less than 15° or less than 10° or less than 5°.

According to preferred embodiments, the plastic tube-like element further comprises a seal portion attached and adjacent to the collar portion, on the side of the collar portion facing the second end of the tube portion. The seal portion can for instance comprise an O-ring seal, a polyurethane (PU) seal or a thermo plastic elastomer (TPE) seal.

According to preferred embodiments, the plastic tube-like element further comprises a seal receiving portion adapted for receiving a seal portion adjacent to the collar portion, on the side of the collar portion facing the second end of the tube portion. The seal receiving portion can for instance comprise a O-ring seal.

The presence or potential presence of a seal portion provides the advantage of facilitating or guaranteeing a sealed coupling between tube-like element and all, which is specifically relevant in the context of a filtration housing.

According to preferred embodiments, the circumferential lip portion is interrupted by radial cuts and comprises a set of separate lip portions.

This provides the advantage that the lip portion is more easily deformable, and that the deformation can be more uniform. It reduces local stresses induced by the deformation process and when the hinge portion is cooling down again afterwards.

According to preferred embodiments, a distance between the collar portion and the circumferential lip portion is smaller than 2 mm.

According to preferred embodiments, the axial projection of an outer wall of the tube portion is smaller than the axial projection of the radially outer rim of the circumferential lip portion. Preferably a radial distance between the axial projection of an outer wall of the tube portion and the axial projection of the outer rim of the circumferential lip portion is within the range of 0.1 to 0.5 mm, or within the range of 0.2 to 0.4 mm. Such embodiments allow pre-centering of the tube-like element in an opening in a wall, and allow for a preliminary locking of the tube-like element in the opening. The tube-like element comprises a first end corresponding to the first end of the tube portion and a second end defined by the circumferential lip portion. When inserting the second end of the plastic tube-like element though a corresponding opening in a wall, the opening corresponding to the axial projection of an outer wall of the tube portion, the circumferential lip portion, and possibly (part of) the hinge portion, needs to be minimally elastically deformed in order to pass through the opening. By applying a pressure on the tube-like element in a longitudinal direction, in a direction perpendicular to the plane of the opening/wall, the sidewall of the opening pushes onto a guiding surface of the circumferential lip portion and pushes the circumferential lip portion inwards in an elastic manner to allow the tube-like element to enter and pass through the opening in the wall. The above mentioned preliminary locking has the advantage that the tube-like filter element cannot accidentally drop out of the opening of the wall. It will be appreciated by the skilled person that such a preliminary locking cannot be considered to correspond to an attachment of fixation and can for instance not be compared with a snap-fit connection. Also, this minimal elastic deformation is within the limits of breaking the circumferential lip portion and/or hinge portion. Indeed, when not being heated, plastics typically used for hollow bodies to be used at common ambient and room temperatures, as for instance air filter housings, could brake when bent too far or being exposed to too much tension in the material.

In a second aspect of the present disclosure, a method is disclosed for attaching a plastic tube-like element according to any of the previous claims to an opening in a wall, comprising the steps of
a. inserting a second end of the plastic tube-like element through the opening of the wall until the collar portion is directly or indirectly in contact with, preferably supported by, the wall;
b. heating the hinge portion to a predetermined temperature or temperature range such that the hinge portion becomes deformable;
c. exerting a predetermined uniform pressure on the inner support surface along an axial direction of the tube-like element, such that the circumferential lip portion is moving from an initial position in which it extends at the first angle with respect to the first plane to a final position in which it extends parallel to the first plane; such that the wall is clamped in between the collar portion and the circumferential lip portion in the final position.

According to preferred embodiments, the method further comprises applying a seal in between the collar portion and the wall. This can be for instance an O-ring seal, a polyurethane (PU) seal or a thermo plastic elastomer (TPE) seal.

According to preferred embodiments, step (b) and (c) are performed simultaneously. According to preferred embodiments, step (b) and (c) are performed simultaneously for a duration within the range of 3 to 60 seconds. More preferably within the range of 5 to 50 seconds. Even more preferably, within the range of 20 to 40 seconds.

In alternative embodiments, heating can step (b) can be applied first, without exerting pressure, for a first period of time, after which the step (c) can be applied for a second period of time.

The first period of time is preferably within the range of 10 sec to 50 sec.

The second period of time is preferably within the range of 1 sec to 10 sec.

According to preferred embodiments, step (a) comprises minimally elastically deforming the circumferential lip portion in order to pass through the opening, by applying a pressure on the tube-like element in a longitudinal direction in a direction perpendicular to the plane of the opening/wall, allowing the sidewall of the opening to push onto a guiding surface of the circumferential lip portion and to push the circumferential lip portion inwards in an elastic manner to allow the tube-like element to enter and pass through the opening in the wall. In such embodiments, a radial distance between the axial projection of the outer rim of the circumferential lip portion and the axial projection of the sidewall of the opening is preferably within the range of 0.2 and 1.5 mm, more preferably between 0.2 to 1 mm, more preferably within the range of 0.2 to 0.4 mm.

The heating is preferably performed to a processing temperature within the range of 100 to 300°C. More preferably, the processing temperature may be in a range of 150°C to 300°C. Yet more preferred, the processing temperature may be in a range of 200°C to 300°C. This is a range which applies to most types of technical plastics. Preferably, the tube-like element comprises or consists of Polypropylene (PP), Acrylonitrile butadiene styrene (ABS) or polyamide (PA), and can optionally further comprise glass fibers. In some embodiments, the processing temperature may be at least 100°C, at least 125°C, at least 150°C, at least 175°C, or at least 200°C. In some embodiments, the processing temperature may be up to 200°C, up to 225°C, up to 250°C, up to 300°C, up to 325°C, or up to 350°C.

According to preferred embodiments, heating the hinge portion to a predetermined temperature or temperature range comprises inserting a first heating or heated tubular body and contacting the support portion with a portion of the first tubular body. Preferably, the first heating or heated tubular body is inserted into the tube-like element from the first side of the tube portion or tube-like element.

According to preferred embodiments, the first tubular body comprises a slanted surface at its extreme end that correspond to the inner support surface. During the heating step of the hinge portion, the slanted surface and the inner support surface are preferably in full direct contact with one another.

According to preferred embodiments, the first tubular body had a conical, tapered or other shape such that it does not contact the inner wall of the tube portion, while it is large enough to contact the inner support surface at its extreme end, preferably with its tapered portion.

According to preferred embodiments, the first tubular body comprises a thermally insulating sleeve or layer around its outer surface, to (further) reduce or avoid the exposure of the tube portion to the heat of the first tube portion.

According to preferred embodiments, the first tubular body comprises channels for guiding hot gas towards its extreme end, preferably the tapered portion.

According to preferred embodiments, heating the hinge portion to a predetermined temperature or temperature range comprises local heating by local application of suitable infrared or laser radiation.

According to preferred embodiments, the method further comprises a step of cooling the hinge portion after step (c). The step of cooling preferably comprises bringing the hinge portion in contact with an object or surface that comprises a temperature far below the manufacturing room temperature (e.g. 5, 10, 15, 20, 25, 30, 50 °C below; a typical room temperature is for instance 21 °C) and thus far below the melting point of the material of the hinge portion.

According to preferred embodiments, the step of cooling the hinge portion has a duration within the range of 3 to 60 seconds. More preferably within the range of 5 to 50 seconds. Even more preferably, within the range of 5 to 40 seconds.

According to preferred embodiments, cooling the hinge portion to a predetermined temperature or temperature range comprises inserting a second cooling or cooled tubular body and contacting the support portion with a portion of the second tubular body. The tubular body can for instance comprise a cylindrical shape. Preferably, the second tubular body is inserted into the tube-like element from the first side of the tube portion or tube-like element.

By passing a second cooled or cooling tubular body after deformation of the hinge portion and final positioning of the lip portion, the final positioning of the hinge portion and the lip portion is achieved more quickly, reducing the risk of unintentional deformation after the removal of the first tubular body.

The second tubular body preferably has a cross-section perpendicular on an axis of the second tubular body, which corresponds to the cross-section of the tubular section. The insertion of the second tubular body in the opening of the tube-like element when the plastic is still at a deformable temperature, also allows a straightening of the internal wall of the resulting tube-like element (in the case of a filter housing, the internal wall of the inlet and/or outlet tube of the filter assembly).

The step of cooling down the hinge portion can for instance have a duration within the range of 1 second to 1 minute. More preferably, the duration can be within the range of 5 to 40 seconds.

Features and advantages disclosed for one of the above aspects of the present disclosure are hereby also implicitly disclosed for the other aspects, mutatis mutandis, as the skilled person will recognize. Especially, features, effects and advantages described in relation with the plastic tube-like element also apply to the method for attaching the plastic tube-like element to a wall, and vice versa.

### Brief description of the drawings

The disclosure will be further elucidated by means of the following description and the appended figures.
- Fig. 1 to Fig. 3 illustrate devices and methods according to preferred embodiments of the present disclosure.
- Fig. 4 illustrates devices and methods according to a further preferred embodiment of the present disclosure.
- Fig. 5 shows details of a further preferred embodiment of a tube-like element according to the present disclosure.
- Fig. 6 shows a detail of still another preferred embodiment of a tube-like element according to the present disclosure.
- Fig. 7 (a) and (b) are pictures of a real example of a tube-like element according to embodiments of the present disclosure, after installation of the tube-like element in an opening in a thin metal plate.
- Fig. 8 shows measurements for real example as depicted in Fig. 7 (a)-(b).

### Detailed description of preferred embodiments

The present disclosure will be described with respect to particular embodiments and with reference to certain drawings, but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

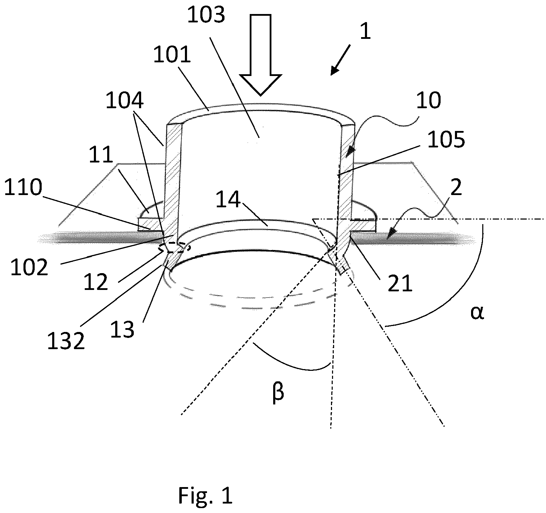

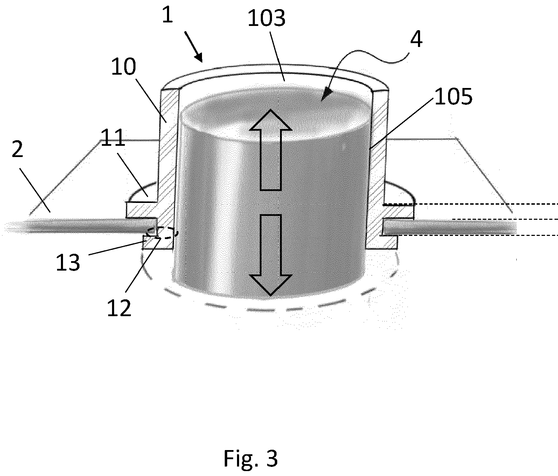

Fig. 1 to Fig. 3 illustrate devices and methods according to embodiments of the present disclosure.

Fig 1 discloses a tube like-like element 1 according to the present disclosure in its initial state, being inserted provisionally in an opening 20 of a wall 2. For instance, the wall 2 is the sidewall of a fluid filter housing, e.g. an air filter housing. The wall 2 is made of metal and is thin, e.g. smaller than 2 mm. This means that pushing locally on the sidewall 2, e.g. in the area of the opening 20, for instance with a magnitude that would otherwise be used for a snap fit connection, would easily result in deformation of the sidewall 2, which has to be avoided because of technical (no good attachment, no sealing possible, etc.) but also esthetical reasons.

The tube-like element 1 comprises a tube portion 10 extending from a first end 101 to a second end 102. A collar portion 11 surrounds the tube portion 10 and is generally radially extending from the tube portion 10 in a first plane. The collar portion 10 is positioned near but not abutting to the second end 102; for instance at a distance of 1, 2, 3 or 4 mm from the second end 102. The collar portion 10 comprises a lower surface 110 which abuts the upper surface 22 of the wall 2.

A circumferential hinge portion 12 is connected to the second end 102 of the tube portion 10 at one side and is connected to a circumferential lip portion 13 at its opposed side. The circumferential lip portion 13 extends from the circumferential hinge portion 12 at a first angle α with respect to said first plane. This angle is generally large enough to allow passing of the circumferential lip portion 12 through the opening 20 when the tube-like element 1 is in its initial state. This may optionally require a minimal elastic deformation of the lip portion but not more, in order to avoid deformation of the sidewall 2 and/or breaking of the circumferential lip portion 13 or circumferential hinge portion 12 at normal ambient temperatures.

The first angle α can for instance be 45°, and is preferably larger than 30°. Preferably, the angle α is such that the axial projection of the outer rim 132 of the circumferential lip portion fits within the projection of the wall opening 20.

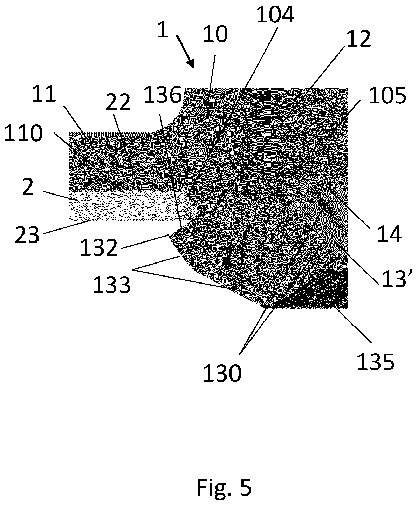

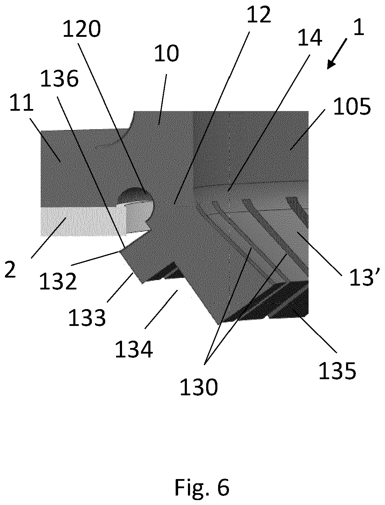

In alternative embodiments, as described in relation with Fig. 5 and Fig. 6, the axial projection of outer rim 132 of the circumferential lip portion 13 is slightly larger than the wall opening 20. For instance, when the tube-like element 1 is cylindrical in shape and the opening 20 has circular shape, the diameter of the outer rim 132 may be up to 2 mm or up to 3 mm larger than the diameter of the opening 20. When the tube-like element 1 is centered within the opening 20, the outer rim 132 shows a 1 mm or 1.5mm overlap with the wall next to the opening 20. The radius of the outer rim 132 is about 2 mm or 1.5 mm or 1 mm larger than the radius of the opening 20.

The circumferential hinge portion 12 comprises an inner support surface 14 projecting into a space defined by an axial projection of an inner surface of said tube portion 10. The inner support surface 140 can be seen as a tapered continuation portion of the inner sidewall 105 of the tube portion 10. The tube portion 10 also comprises an outer sidewall portion 104 which typically corresponds to the opening of 20. For instance, in can have a slightly smaller radius than the radius of the opening 20. The radius of the outer sidewall portion 104 can for instance be 0.1 or 0.2 or 0.3 or 0.4 or 0.5 or 0.75 or 1 mm smaller than the radius of the opening 20.

The inner support surface 104 serves both as a reference surface for both heating and exerting pressure on the circumferential hinge portion 12, which is both needed for bringing the tube-like element 1 in its second, final state, where it is eventually attached to the wall opening 20. Although the inner support surface 104 is depicted as continuous, it can also be discontinuous; it can comprise a set of separate support surfaces, which would preferrable be arranged at constant angular intervals.

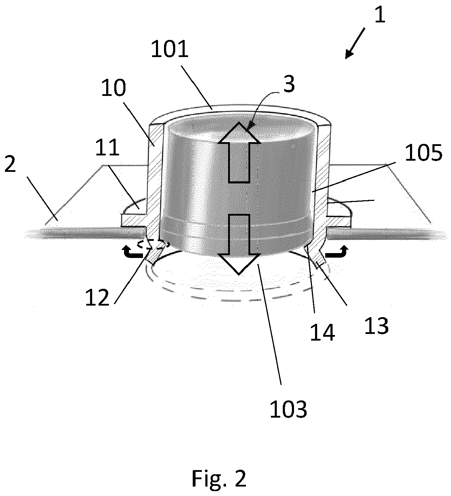

Fig. 2 illustrates how a first heating or heated tubular body 3 is inserted in a controlled manner into the internal volume 103 of the tube-like element 1 and contacts the support portion 14 with a portion of said first tubular body 3. For instance, the first tubular body is inserted from the outside of a filter housing. This first tubular body preferably has a tapered portion at its end that corresponds to the taper of the support portion 14, for optimal heat transfer to the hinge portion and, later, for optimal pressure distribution on the support portion 14. The first tubular body 3 can for instance a heated metal cylinder. In preferred embodiments, the first tubular body 3 has an exposed, hot metal surface at its lower end, and comprises a thermally insulating sleeve or layer in its circumferential region above the exposed hot surface, to avoid heat transfer to any portion of the tube portion 10 in an area above the support portion 14.

After an initial heating of the hinge portion 12, it becomes deformable. Once the hinge portion becomes deformable, the heat is continued to be applied, but the first tubular body 3 is pushed further down in a controlled manner in order to deform the hinge portion 12 and bring the circumferential lip portion 13, which is somehow pivoting on the circumferential lip portion 13 (itself not being deformable as it is more remote from the heat source), towards and in its second, final state where it clamps the wall 2 by contacting the lower surface 23 of the wall 2. It will be appreciated by the skilled person that the size of the hinge portion 12 is predetermined in function of the thickness of the wall 2.

After the circumferential lip portion 13 has reached its second, final state, the first tubular body 3 is removed from the internal volume 103 of the tube-like element 1 from the same side as from where it entered the internal volume 103. The is preferably performed in a quick manner such that the heat does cause any unwanted deformation of the tube-like element 1 in other areas, for instance within less than 1 second, or within less than 0.5 second, or within less than 0.2 seconds.

Optionally, the shape of the tube-like element 1, especially its hinge portion, and thus also the orientation of the circumferential lip portion in its second state, are fixed in an expedite manner by inserting a second cooled or cooling tubular body 4 into the internal volume 103 from the same side as the first tubular body 3. The second tubular body 4 can for instance be a cooled metal cylinder with a diameter corresponding to the diameter of the internal volume 103 / tubular portion 10. The second tubular body may also support the deformed hinge portion while its temperature decreases and becomes not deformable again; this may result in a very smooth inner sidewall of the tube-like element and thus in a very smooth inner sidewall of an inlet or outlet of an air cleaner housing. It is advantageous that debris and/or dust is thereby reduced or avoided.

Once the temperature of the hinge portion 12 has decreased sufficiently, the plastic becomes nondeformable again and the second tubular body 4 can be removed from the inner volume 103 from the same side as where it entered the inner volume 103, e.g. again from the outside of the filter housing.

It is an advantage of the disclosed device and process that they allow installation of the tube-like element to a filter housing from a single side of the housing only, especially from the outside of the housing.

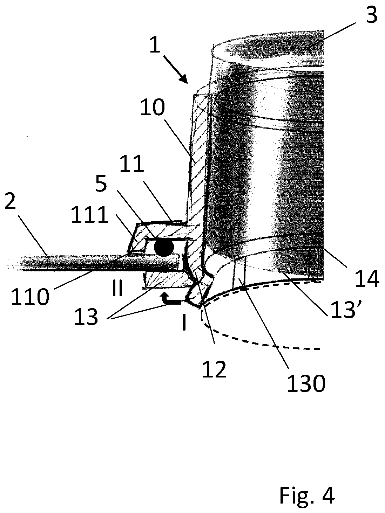

Fig. 4 illustrates a device and method according to a further preferred embodiment of the present disclosure. It is very similar to the embodiment described in relation to Fig. 1 to Fig. 3 but differs in the fact that the circumferential collar portion 11, which is in contact with the upper surface 22 of the wall 2 by means of its lower surface 110, comprises a cavity with a seal 5, for instance an O-ring seal, a polyurethane (PU) seal or a thermo plastic elastomer (TPE) seal. In another view, the collar portion comprises a support portion 111 laterally adjacent to the seal 5. The presence of a seal can be preferred to create a sealing connection between the tube-like element 1 and the wall 2 /housing. The circumferential lip portion 13 (and optionally continuing in a lower part of the hinge portion 12) also comprises a series of cuts 130, cutting the lip portion 13 in separate lip portions 13'. The cuts 130 are preferably arranged at regular angular intervals. There can be at least 2, or at least 4 or at least 10 or at least 20 or at least 30 cuts. It has been found that the deformation of the hinge portion 12 can occur more uniformly by the presence of the cuts 130, and the circumferential lip portion 13 can move from its first state I to its second state II more easily. The features of the presence of a seal 5 and the presence of the series of cuts 130 don't need to be necessarily combined. Indeed, in some embodiments, there are no cuts 130 and there is a seal 5. In others there is a seal but there are no cuts 130.

Fig. 5 shows details of another preferred embodiment of a tube-like element 1 according to the present disclosure. This embodiment is very similar to the previous embodiments, and similar features and characteristics are indicated in the Figures but are not described again. The circumferential lip portion 13 comprises an upper surface 136 that is brought in contact with the lower surface 23 of the wall 2 in its final position. In the final position, the wall 2, especially a portion of the wall surrounding the opening 20, is clamped in between the collar portion 11 (lower face 110) and the circumferential portion 13 (upper surface 136). The circumferential lip portion 13 comprises a radial outer rim 132 and a guiding surface 133 for guiding and pushing the circumferential lip portion 13 inwardly by the inner wall 21 of the opening 20, during initial minimal elastic deformation of the hinge portion 12, as explained above. The circumferential lip portion 13, and optionally a lower part of the hinge portion 12, comprise a series of cuts 130 extending axially and separating the circumferential lip portion 13 in separate lip parts 13'. The circumferential lip portion 13 comprises a lower end surface 135.

Fig. 6 shows a detail of still other preferred embodiments of a plastic tube-like element according to the present disclosure, which is identical to the embodiments explained in relation with Fig. 5, except for:
- the presence of recess 134 at a location of part of the guiding surface 133 of Fig. 5, resulting in a shorter guiding surface 133; this illustrates that different shapes of circumferential lip portions can be thought of without departing from the insights of the present disclosure;
- the presence of a circumferential trench 120 at the area where the circumferential hinge portion 12, the collar portion 11 and the tube portion 10 are coming together. The trench 120 can have a substantially circular cross-section along its circumference, or can have other shapes as for instance rectangular or triangular. The presence of such a trench 120 reduces the amount of material in the hinge portion 12 and adjacent parts of neighbouring portions 10 and 11. This can result the fact the hinge portion can be heated more quickly, becomes deformable more quickly, and deforms more easily (less force needed).

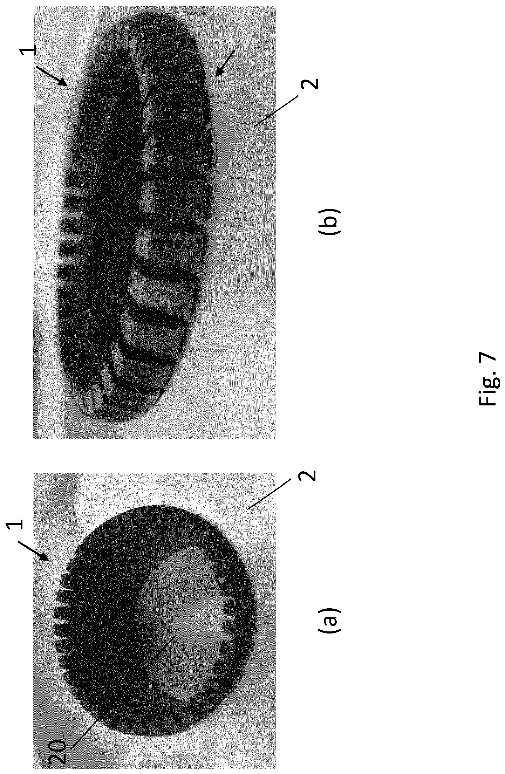

Fig. 7 (a) and (b) are pictures of a real example (prototype phase) of a plastic tube according to embodiments of the present disclosure, similar to those described in relation to Fig. 5, after installation of the plastic tube-like element 1 in an opening 20 in a thin metal plate. The conclusion is that the tube-like elements 1 can effectively be used in associated methods for attaching the tube-like elements 1 to a wall 2, resulting in a high quality, reproducible attachment or fixation of the tube-like element to the wall.

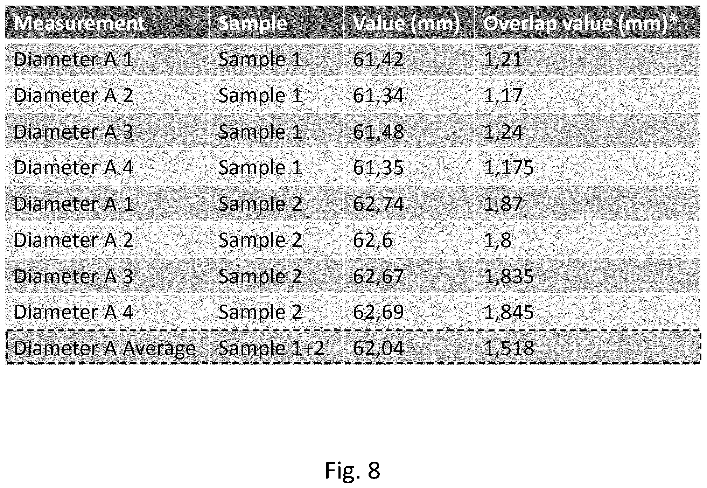

Fig. 8 shows measurements for the real examples as depicted in Fig. 7 (a)-(b). The wall opening 20 is circular and has a diameter of 59 mm. The outer diameter of the circumferential lip portion 13 in its second of final state has been measured along the circumference of the opening 20 (A1 to A4), for two different samples (Sample 1, Sample 2). An overlap value was determined as ½ * (outer diameter circumferential lip portion - diameter opening), and was averaged out over the different measurements and samples, resulting in a value of about 1.5 mm. It is believed that even larger overlap values can be achieved and the results are convincing that this process can successfully be applied in industrial production. An overlap of more than 1 mm or more should also be mechanically robust.

The heating of the hinge portion of the tube-like element is generally performed until the hinge portion becomes deformable, by heating it to a predetermined processing temperature range or temperature, preferably further in ambient conditions, as for instance at ambient air pressure.

The processing temperature depends on the specific material chosen for the tube-like element.

The preferred processing temperature may be selected by a person having skills in the art with reference to the material characteristics of the tube-like element.

The processing temperature is preferably greater than the glass transition temperature of the material forming the tube-like element 1 intended to be attached to the opening 20 in the wall 2.

In some embodiments, the processing temperature may be at least 100°C, at least 125°C, at least 150°C, at least 175°C, or at least 200°C. In some embodiments, the processing temperature may be up to 200°C, up to 225°C, up to 250°C, up to 300°C, up to 325°C, or up to 350°C. In an exemplary embodiment, the processing temperature may be in a range of 100°C to 300°C. In another exemplary embodiment, the processing temperature may be in a range of 150°C to 300°C. In yet another exemplary embodiment, the processing temperature may be in a range of 200°C to 300°C.

When the material or combination of materials comprises a polymeric fraction as a single phase in the amorphous state (including, for example, a polystyrene (PS) or a polycarbonate (PC)), the glass transition temperature of the material is to be construed as the midpoint temperature (Tmg) determined using Differential Scanning Calorimetry (DSC) according to ASTM D3418-99, entitled "Standard Test Method for Transition Temperatures of Polymers by Differential Scanning Calorimetry." The midpoint temperature (Tmg) is used as a representation of the glass transition temperature (Tg) because the glass transition is, in practice, a temperature range. Any suitable instrument may be used to conduct DSC; however, in an exemplary embodiment, a DSC3+ (Mettler-Toledo AG, Schwerzenbach, Switzerland) with a FRS 6+ sensor may be used.

When the material or materials comprises a semi-crystalline polymeric material or any other materials displaying more than a single polymer phase (including, for example, a polypropylene (PP) or a polyethylene (PE)), the glass transition temperature of the material is defined as the final temperature at which the elastic modulus (G') and the loss modulus (G") intersect, when G' and G" are plotted against temperature from 0°C to a temperature at which the polymer is in a melt state. G' and G" are defined per ASTM D4092-01, entitled "Standard Terminology for Plastics: Dynamic Mechanical Properties." The rise of tan δ may be used to characterize a system under transition towards the melt flow zone. Herein G' and G" are determined using temperature sweeping dynamic mechanical analysis (DMA) according to ASTM D4440-15, entitled "Standard Test Method for Plastics: Dynamic Mechanical Properties Melt Rheology" using a mechanical spectrometer to measure forced constant amplitude fixed frequency shear oscillation, as further described in ASTM D4065-12, entitled "Standard Practice for Plastics: Dynamic Mechanical Properties: Determination and Report of Procedures." Any suitable dynamic mechanical analyzer may be used; however, in an exemplary embodiment, a Q800 (TA Instruments, New Castle, DE) may be used.

## Claims

1. A plastic tube-like element (1) for being connected to an opening (20) in a wall (2), the tube like element (1) comprising:
- a tube portion (10) extending from a first end (101) to a second end (102);
- a collar portion (11) surrounding the tube portion (10) and generally radially extending from said tube portion (10) in a first plane, said collar portion (10) being positioned near but not abutting to the second end (102);
- a circumferential hinge portion (12) connected to said second end (102) of said tube portion (10) and connected to
- a circumferential lip portion (13), extending from said circumferential hinge portion (12) at a first angle (α) larger than 30° with respect to said first plane;
- wherein said circumferential hinge portion (12) comprises an inner support surface (14) projecting into a space defined by an axial projection of an inner surface of said tube portion; **characterised in that**
said hinge portion (12) is adapted to deform such that said circumferential lip portion (13) is moving from an initial position (I) in which it extends at said first angle (α) with respect to said first plane to a final position (II) in which it extends parallel to said first plane, when said hinge portion (12) is being heated to a predetermined temperature or temperature range in which said hinge portion (12) becomes deformable; and
when said inner support surface (14) receives a predetermined uniform pressure exerted along an axial direction of said tube-like element (1).

2. A plastic tube-like element (1) according to claim 1, wherein said inner support surface (14) is
(a) radially extending from a first radial position corresponding to said axial projection of said inner surface of said tube portion to a second radial position internal to said axial projection of said inner surface of said tube portion (10); while
(b) axially extending from a first axial position near the end of said tube portion (10) to a second axial position away from said tube portion (10).

3. A plastic tube-like element (1) according to any of the previous claims, wherein said inner support surface (14) is a circumferential support surface (14).

4. A plastic tube-like element (1) according to any of the previous claims, wherein said inner support surface (14) has a contour which is ring shaped in axial projection and is tapered such that it forms a second angle (β) with said inner surface of said tube portion (10) of more than 30°.

5. A plastic tube-like element according to claim 4, wherein said first angle (α) and said second angle (β) are about the same.

6. A plastic tube-like element according to any of the previous claims, further comprising a seal portion (5) attached and adjacent to said collar portion (11), on the side of said collar portion (11) facing said second end (102) of said tube portion (10).

7. A plastic tube-like element according to any of the previous claims, wherein said circumferential lip portion (13) is interrupted by radial cuts (130) and comprises a set of separate lip portions (13').

8. A plastic tube-like element according to any of the previous claims, wherein a distance between said collar portion (11) and said circumferential lip portion (13) is smaller than 2 mm.

9. A method for attaching a plastic tube-like element (1) according to any of the previous claims, to an opening (20) in a wall (2), comprising the steps of
a. inserting a second end of said plastic tube-like element through said opening (20) of said wall until said collar portion (10) is directly or indirectly in contact with said wall (20);
b. heating said hinge portion (12) to a predetermined temperature or temperature range such that said hinge portion (12) becomes deformable;
c. exerting a predetermined uniform pressure on said inner support surface (14) along an axial direction of said tube-like element, such that said circumferential lip portion (13) is moving from an initial position (I) in which it extends at said first angle with respect to said first plane to a final position (II) in which it extends parallel to said first plane; such that said wall is clamped in between said collar portion (10) and said circumferential lip portion (13) in said final position.

10. A method according to claim 9, further comprising applying a seal (5) in between said collar portion (10) and said wall (2).

11. A method according to claims 9 or 10, wherein step (b) and (c) are performed simultaneously.

12. A method according to any of claims 9 to 11, wherein heating said hinge portion (12) to a predetermined temperature or temperature range comprises inserting a first heating or heated tubular body and contacting said support portion with a portion of said first tubular body.

13. A method according to any of claims 9 to 12, further comprising a step of cooling said hinge portion (12) after step (c).

14. A method according to claim 13, wherein cooling said hinge portion (12) to a predetermined temperature or temperature range comprises inserting a second cooling or cooled tubular body and contacting said support portion with a portion of said second tubular body.

## Patentansprüche

1. Kunststoffrohrartiges Element (1) zum Verbinden mit einer Öffnung (20) in einer Wand (2), wobei das rohrartige Element (1) aufweist:
- einen Rohrabschnitt (10), der sich von einem ersten Ende (101) zu einem zweiten Ende (102) erstreckt;
- einen Kragenabschnitt (11), der den Rohrabschnitt (10) umgibt und sich im Allgemeinen radial von dem Rohrabschnitt (10) in einer ersten Ebene erstreckt, wobei der Kragenabschnitt (10) nahe dem zweiten Ende (102), jedoch nicht daran angrenzend, angeordnet ist;
- einen umfänglichen Gelenkabschnitt (12), der mit dem zweiten Ende (102) des Rohrabschnitts (10) verbunden ist und verbunden ist mit
- einem umfänglichen Lippenabschnitt (13), der sich von dem umfänglichen Gelenkabschnitt (12) in einem ersten Winkel (α) in Bezug auf die erste Ebene weg erstreckt, der größer als 30° ist;
- wobei der umfängliche Gelenkabschnitt (12) eine innere Stützoberfläche (14) aufweist, die in einen Raum hineinragt, welcher durch eine Axialprojektion einer inneren Oberfläche des Rohrabschnitts definiert wird;
**dadurch gekennzeichnet, dass**
der Gelenkabschnitt (12) dazu ausgebildet ist, sich derart zu verformen, dass sich der umfängliche Lippenabschnitt (13) von einer Ausgangsposition (I), in der er sich in dem ersten Winkel (α) in Bezug auf die erste Ebene erstreckt, zu einer Endposition (II), in der er sich parallel zu der ersten Ebene erstreckt, bewegt, wenn der Gelenkabschnitt (12) auf eine vorbestimmte Temperatur oder einen vorbestimmten Temperaturbereich erhitzt wird, in dem der Gelenkabschnitt (12) verformbar wird; und
wenn die innere Stützoberfläche (14) mit einem vorbestimmten gleichmäßigen Druck beaufschlagt wird, der entlang einer axialen Richtung des rohrartigen Elements (1) ausgeübt wird.

2. Kunststoffrohrartiges Element (1) nach Anspruch 1, wobei sich die innere Stützoberfläche (14)
(a) radial von einer ersten radialen Position, die der Axialprojektion der inneren Oberfläche des Rohrabschnitts entspricht, zu einer zweiten radialen Position innerhalb der Axialprojektion der inneren Oberfläche des Rohrabschnitts (10) erstreckt; während sie sich
(b) axial von einer ersten axialen Position nahe dem Ende des Rohrabschnitts (10) zu einer zweiten axialen Position, die von dem Rohrabschnitt (10) entfernt ist, erstreckt.

3. Kunststoffrohrartiges Element (1) nach einem beliebigen der vorhergehenden Ansprüche, wobei die innere Stützoberfläche (14) eine umfängliche Stützoberfläche (14) ist.

4. Kunststoffrohrartiges Element (1) nach einem beliebigen der vorhergehenden Ansprüche, wobei die innere Stützoberfläche (14) eine Kontur aufweist, die in der Axialprojektion ringförmig ist und derart verjüngt ist, dass sie einen zweiten Winkel (β) mit der inneren Oberfläche des Rohrabschnitts (10) von mehr als 30° bildet.

5. Kunststoffrohrartiges Element nach Anspruch 4, wobei der erste Winkel (α) und der zweite Winkel (β) etwa gleich sind.

6. Kunststoffrohrartiges Element nach einem beliebigen der vorhergehenden Ansprüche, ferner aufweisend einen Dichtungsabschnitt (5), der an dem Kragenabschnitt (11) befestigt ist und an diesen angrenzt, auf der Seite des Kragenabschnitts (11), die dem zweiten Ende (102) des Rohrabschnitts (10) zugewandt ist.

7. Kunststoffrohrartiges Element nach einem beliebigen der vorhergehenden Ansprüche, wobei der umfängliche Lippenabschnitt (13) durch radiale Einschnitte (130) ungebrochen ist und einen Satz von getrennten Lippenabschnitten (13') aufweist.

8. Kunststoffrohrartiges Element nach einem beliebigen der vorhergehenden Ansprüche, wobei ein Abstand zwischen dem Kragenabschnitt (11) und dem umfänglichen Lippenabschnitt (13) kleiner als 2 mm ist.

9. Verfahren zum Befestigen eines kunststoffrohrartigen Elements (1) nach einem der vorhergehenden Ansprüche an einer Öffnung (20) in einer Wand (2), umfassend folgende Schritte:
a. Einführen eines zweiten Endes des kunststoffrohrartigen Elements durch die Öffnung (20) der Wand, bis der Kragenabschnitt (10) direkt oder indirekt mit der Wand (20) in Kontakt ist;
b. Erhitzen des Gelenkabschnitts (12) auf eine vorbestimmte Temperatur oder einen vorbestimmten Temperaturbereich, derart, dass der Gelenkabschnitt (12) verformbar wird;
c. Ausüben eines vorbestimmten gleichmäßigen Drucks auf die innere Stützoberfläche (14) entlang einer axialen Richtung des rohrartigen Elements, derart, dass sich der umfängliche Lippenabschnitt (13) von einer Ausgangsposition (I), in der er sich in dem ersten Winkel in Bezug auf die erste Ebene erstreckt, zu einer Endposition (II), in der er sich parallel zu der ersten Ebene erstreckt, bewegt; derart, dass in der Endposition die Wand zwischen dem Kragenabschnitt (10) und dem umfänglichen Lippenabschnitt (13) eingeklemmt wird.

10. Verfahren nach Anspruch 9, ferner umfassend Anbringen einer Dichtung (5) zwischen dem Kragenabschnitt (10) und der Wand (2).

11. Verfahren nach Anspruch 9 oder 10, wobei Schritt (b) und (c) gleichzeitig durchgeführt werden.

12. Verfahren nach einem beliebigen der Ansprüche 9 bis 11, wobei Erhitzen des Gelenkabschnitts (12) auf eine vorbestimmte Temperatur oder einen vorbestimmten Temperaturbereich Einführen eines ersten erhitzenden oder erhitzten rohrförmigen Körpers und Inkontaktbringen des Stützabschnitts mit einem Abschnitt des ersten rohrförmigen Körpers umfasst.

13. Verfahren nach einem der Ansprüche 9 bis 12, ferner umfassend einen Schritt des Kühlens des Gelenkabschnitts (12) nach Schritt (c).

14. Verfahren nach Anspruch 13, wobei Kühlen des Gelenkabschnitts (12) auf eine vorbestimmte Temperatur oder einen vorbestimmten Temperaturbereich Einführen eines zweiten kühlenden oder gekühlten rohrförmigen Körpers und Inkontaktbringen des Stützabschnitts mit einem Abschnitt des zweiten rohrförmigen Körpers umfasst.

## Revendications

1. Élément en plastique en forme de tube (1) destiné à être relié à une ouverture (20) dans une paroi (2), l'élément en forme de tube (1) comprenant :
- une portion formant tube (10) s'étendant à partir d'une première extrémité (101) jusqu'à une seconde extrémité (102) ;
- une portion formant collerette (11) entourant la portion formant tube (10) et s'étendant globalement de façon radiale à partir de ladite portion formant tube (10) dans un premier plan, ladite portion formant collerette (10) étant positionnée près de, mais sans buter contre, la seconde extrémité (102) ;
- une portion formant charnière circonférentielle (12) reliée à ladite seconde extrémité (102) de ladite portion formant tube (10) et reliée à
- une portion formant lèvre circonférentielle (13), s'étendant à partir de ladite portion formant charnière circonférentielle (12) à un premier angle (a) supérieur à 30° par rapport audit premier plan ;
- dans lequel ladite portion formant charnière circonférentielle (12) comprend une surface de support intérieure (14) se projetant dans un espace défini par une projection axiale d'une surface intérieure de ladite portion formant tube ;
**caractérisé en ce que** ladite portion formant charnière (12) est conçue pour se déformer de telle sorte que ladite portion formant lèvre circonférentielle (13) passe d'une position initiale (I), dans laquelle elle s'étend à ce dit premier angle (α) par rapport audit premier plan, à une position finale (II), dans laquelle elle s'étend parallèlement audit premier plan, lorsque ladite portion formant charnière (12) est chauffée à une température prédéterminée ou dans une plage de températures à laquelle ladite portion formant charnière (12) devient déformable ; et
lorsque ladite surface de support intérieure (14) reçoit une pression uniforme prédéterminée exercée le long d'une direction axiale dudit élément en forme de tube (1).

2. Élément en plastique en forme de tube (1) selon la revendication 1, dans lequel ladite surface de support intérieure (14)
(a) s'étend de façon radiale à partir d'une première position radiale correspondant à ladite projection axiale de ladite surface intérieure de ladite portion formant tube jusqu'à une seconde position radiale interne à ladite projection axiale de ladite surface intérieure de ladite portion formant tube (10) ; tout en
(b) s'étendant de façon axiale à partir d'une première position axiale près de l'extrémité de ladite portion formant tube (10) jusqu'à une seconde position axiale éloignée de ladite portion formant tube (10).

3. Élément en plastique en forme de tube (1) selon l'une quelconque des revendications précédentes, dans lequel ladite surface de support intérieure (14) est une surface de support circonférentielle (14).

4. Élément en plastique en forme de tube (1) selon l'une quelconque des revendications précédentes, dans lequel ladite surface de support intérieure (14) a un contour en forme d'anneau en projection axiale et est conique de sorte qu'elle forme un second angle (β) avec ladite surface intérieure de ladite portion formant tube (10) de plus de 30°.

5. Élément en plastique en forme de tube selon la revendication 4, dans lequel ledit premier angle (α) et ledit second angle (β) sont sensiblement identiques.

6. Élément en plastique en forme de tube selon l'une quelconque des revendications précédentes, comprenant en outre une portion formant joint (5) attachée et adjacente à ladite portion formant collerette (11), sur le côté de ladite portion formant collerette (11) faisant face à ladite seconde extrémité (102) de ladite portion formant tube (10).

7. Élément en plastique en forme de tube selon l'une quelconque des revendications précédentes, dans lequel ladite portion formant lèvre circonférentielle (13) est interrompue par des découpes radiales (130) et comprend un ensemble de portions formant lèvre distinctes (13').

8. Élément en plastique en forme de tube selon l'une quelconque des revendications précédentes, dans lequel une distance entre ladite portion formant collerette (11) et ladite portion formant lèvre circonférentielle (13) est inférieure à 2 mm.

9. Procédé pour attacher un élément en plastique en forme de tube (1), selon l'une quelconque des revendications précédentes, à une ouverture (20) dans une paroi (2), comprenant les étapes suivantes :
a. insertion d'une seconde extrémité dudit élément en plastique en forme de tube à travers ladite ouverture (20) de ladite paroi jusqu'à ce que ladite portion formant collerette (10) soit directement ou indirectement en contact avec ladite paroi (20) ;
b. chauffage de ladite portion formant charnière (12) à une température prédéterminée ou à une plage de températures telle que ladite portion formant charnière (12) devient déformable ;
c. exercice d'une pression uniforme prédéterminée sur ladite surface de support intérieure (14) le long d'une direction axiale dudit élément en forme de tube, de telle sorte que ladite portion formant lèvre circonférentielle (13) passe d'une position initiale
(I) dans laquelle elle s'étend à ce dit premier angle par rapport audit premier plan à une position finale
(II) dans laquelle elle s'étend parallèlement audit premier plan ; de telle sorte que ladite paroi est serrée entre ladite portion formant collerette (10) et ladite portion formant lèvre circonférentielle (13) dans ladite position finale.

10. Procédé selon la revendication 9, comprenant en outre l'application d'un joint (5) entre ladite portion formant collerette (10) et ladite paroi (2).

11. Procédé selon les revendications 9 ou 10, dans lequel les étapes (b) et (c) sont réalisées de façon simultanée.

12. Procédé selon l'une quelconque des revendications 9 à 11, dans lequel le chauffage de ladite portion formant charnière (12) à une température prédéterminée ou à une plage de températures comprend l'insertion d'un premier corps tubulaire chauffant ou chauffé et la mise en contact de ladite portion formant support avec une portion dudit premier corps tubulaire.

13. Procédé selon l'une quelconque des revendications 9 à 12, comprenant en outre une étape de refroidissement de ladite portion formant charnière (12) après l'étape (c).

14. Procédé selon la revendication 13, dans lequel le refroidissement de ladite portion formant charnière (12) à une température prédéterminée ou à une plage de températures comprend l'insertion d'un second corps tubulaire refroidissant ou refroidi et la mise en contact de ladite portion formant support avec une portion dudit second corps tubulaire.
